(19) Europäisches Patentamt
European Patent Office
Office européen des brevets

(11) **EP 2 245 717 B1**

(12) **EUROPÄISCHE PATENTSCHRIFT**

(45) Veröffentlichungstag und Bekanntmachung des Hinweises auf die Patenterteilung:
**06.07.2011 Patentblatt 2011/27**

(21) Anmeldenummer: **09712760.9**

(22) Anmeldetag: **18.02.2009**

(51) Int Cl.:
*H02J 3/18* *(2006.01)*          *H02M 5/453* *(2006.01)*
*H02P 9/48* *(2006.01)*

(86) Internationale Anmeldenummer:
**PCT/EP2009/001139**

(87) Internationale Veröffentlichungsnummer:
**WO 2009/103504 (27.08.2009 Gazette 2009/35)**

(54) **WINDENERGIEANLAGE MIT DOPPELT GESPEISTEM ASYNCHRONGENERATOR UND UMRICHTERREGELUNG**

WIND ENERGY PLANT HAVING A DOUBLE-ENERGIZED ASYNCHRONOUS GENERATOR AND CONVERTER CONTROL

ÉOLIENNE COMPORTANT UN GÉNÉRATEUR ASYNCHRONE À ALIMENTATION DOUBLE ET UN SYSTÈME DE RÉGULATION DU CONVERTISSEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.02.2008   DE 102008010260**
            **24.07.2008   DE 102008034531**
            **24.07.2008   DE 102008034532**

(43) Veröffentlichungstag der Anmeldung:
**03.11.2010   Patentblatt 2010/44**

(73) Patentinhaber: **REpower Systems AG**
**22297 Hamburg (DE)**

(72) Erfinder:
• **LETAS, Heinz-Hermann**
  **23701 Süsel (DE)**
• **FORTMANN, Jens**
  **13156 Berlin (DE)**

(74) Vertreter: **Glawe, Delfs, Moll**
**Patent- und Rechtsanwälte**
**Rothenbaumchaussee 58**
**20148 Hamburg (DE)**

(56) Entgegenhaltungen:
**WO-A-2005/099063     GB-A- 2 432 267**
**US-A- 5 652 485     US-A1- 2003 214 823**

## Beschreibung

Die Erfindung betrifft ein Verfahren zum Steuern eines Umrichters einer Windenergieanlage, der am Rotor eines doppelt gespeisten Asynchrongenerators zur Einspeisung elektrischer Energie an ein elektrisches Netz angeschlossen ist, wobei der Umrichter einen generatorseitigen Wechselrichter und einen netzseitigen Wechselrichter aufweist. Die Erfindung betrifft ferner eine Windenergieanlage mit einem Umrichter und einer Umrichterregelung zur Ausführung des Verfahrens.

Frequenzumrichter finden in zunehmendem Maße Verwendung bei Windenergieanlagen. Moderne Windenergieanlagen sind üblicherweise drehzahlvariabel, sodass der Generator Wechselstrom mit unterschiedlicher Frequenz erzeugt. Zur Einspeisung in ein festfrequentes Versorgungsnetz (üblicherweise 50 Hz) ist eine Frequenzumrichtung erforderlich. Dazu werden Frequenzumrichter verwendet. Bevorzugt verwendet werden dabei Umrichter, die aus einem mit dem Rotor des Generators elektrisch verbundenen generatorseitigen Wechselrichter, einem Gleichspannungszwischenkreis und einem mit dem Netz elektrisch verbundenen netzseitigen Wechselrichter bestehen. Üblicherweise wurden Windenergieanlagen so betrieben, dass sie sich bei Netzfehlern, insbesondere Kurzschlüssen, vom Netz trennen. Mit zunehmender Verbreitung von Windenergieanlagen und dem Anstieg der installierten Windleistung ist aber nicht mehr nur ein einfaches Einspeisen des Wirkstroms in das elektrische Netz gefordert, sondern ein Betrieb der Windenergieanlagen ist gewünscht, der die Netzspannung stützt. Diese Netzspannung umfasst ein Einspeisen von Wirkleistung also auch unter ungünstigen Bedingungen, wie Spannungsabweichungen oder Abweichungen der Netzfrequenz vom Sollwert. Bei erniedrigter Spannung bzw. erniedrigter Netzfrequenz ist ein stützender Betrieb erwünscht. Dabei kann bei den für Windenergieanlagen höherer Leistung häufig verwendeten doppelt gespeisten Asynchrongeneratoren das Problem entstehen, dass der Umrichter nur für etwa ein Drittel der elektrischen Leistung der Windenergieanlage ausgelegt ist und die zusätzliche zur Netzstützung notwendigen Ströme nicht mehr erreichen kann.

Aus der DE 10 2007 028 582 A1 ist es bekannt, bei einem Generator mit Vollumrichter, über den die gesamte elektrische Leistung in das elektrische Netz eingespeist wird, den generatorseitigen Wechselrichter direkt an das Netz anzuschließen, und zwar wenn der Generator keine Energie mehr erzeugt und damit der netzseitige Wechselrichter zur Einspeisung zusätzlicher Blindleistung in das Netz herangezogen werden kann. Nachteilig an diesem Konzept ist, dass die erwünschte Stützung nur dann erfolgen kann, wenn vom Generator keine Energie abgegeben wird.

Weiter ist es bei Windenergieanlagen mit Vollumrichtern bekannt, die Einspeisung von Blindleistung abhängig von der Netzspannung und der abgegebenen Wirkleistung durchzuführen (US 2003/0214823 A1). Dies geschieht allein über den netzseitigen Wechselrichter. Weiter ist es bekannt, zur Optimierung der abgegebenen Wirkleistung den Fluss durch einen Generatorluftspalt so lange zu variieren, bis eine Optimalitätsbedingung erfüllt ist (US 5,652,485 A).

Der Erfindung liegt die Aufgabe zugrunde, bei Windenergieanlagen der eingangs genannten Art mit doppelt gespeistem Asynchrongenerator die Netzstützung zu verbessern.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Steuern eines Umrichters einer Windenergieanlage, der am Rotor eines doppelt gespeisten Asynchrongenerators zur Einspeisung elektrischer Energie in ein elektrisches Netz angeschlossen ist, wobei der Umrichter einen generatorseitigen Wechselrichter, einen netzseitigen Wechselrichter und wenigstens einen Umrichterregler zum Regeln und/oder Steuern der von dem wenigstens einem der Wechselrichter an den doppelt gespeisten Asynchrongenerator und/oder das elektrische Netz abgegebenen Strom umfasst, ist erfindungsgemäß vorgesehen ein Detektieren einer Änderung der abgegebenen Wirkleistung, ein Bestimmen, ob die detektierte Änderung einer vordefinierten Bedingung zu einem Netzparameter genügt, und Ändern des Sollwerts der abzugebenden Blindleistung, und zwar gegenläufig zu der Änderung der Wirkleistung am netzseitigen Wechselrichter und mitläufig bei dem generatorseitigen Wechselrichter, sofern die vordefinierte Bedingung erfüllt ist.

Nachfolgend seien zuerst einige verwendete Begriffe erläutert:

Unter Wirkleistung wird der Teil der von der Windenergieanlage in das Netz abgegebenen Leistung verstanden, die stich aus dem Produkt aus Spannung und dazu in Phase befindlichem Strom (Wirkstrom) ergibt. Die Blindleistung ist das Produkt aus Spannung und dem nicht in Phase befindlichen Strom (Blindstrom).

Unter der Änderung der Wirkleistung wird eine Änderung der Amplitude oder Phasenlage der Ströme zueinander oder im Verhältnis zur Netzspannung oder einem anderen Referenzwert verstanden. Im Fall des generatorseitigen Umrichters fällt hierunter auch die Änderung der in den Generator-Stator eingeprägten Ströme verstanden. Auf die Art der Berechnung oder Darstellung kommt es hierbei nicht an, so werden die generatorseitigen Ströme von Umrichterreglern häufig in so genannten feldorientierten Koordinaten geregelt, welche über eine mathematische Transformation aus dem dreiphasigen System berechnet werden und zur Ansteuerung der Wechselrichter wieder in dieses rückgeführt werden.

Unter einer vordefinierten Bedingung wird insbesondere das Erreichen eines einstellbaren Grenzwerts für Netzparameter, wie Netzspannung oder Netzfrequenz verstanden. Diese Größe kann, muss aber nicht, direkt messbar sein, kann aber auch durch Berechnung bestimmt sein. Dabei braucht die vordefinierte Bedingung nicht zwingend in allen drei Phasen gleichzeitig vorzukommen, sondern es genügt, wenn sie nur in einer oder zwei Phasen auftritt.

Die Erfindung beruht auf der Erkenntnis, dass sich die Ausnutzung des Potentials einer Windenergieanlage mit doppelt gespeistem Asynchrongenerator erheblich steigern lässt, wenn bei Auftreten bestimmter Bedingungen im Netz die Sollwertvorgaben beider Wechselrichter des Umrichters verändert werden, und zwar gegensinnig zueinander. Mit einer solchen gegenseitigen Verstimmung der Wechselrichter wird das Gesamtverhalten des Umrichters bzw. der gesamten Windenergieanlage so verbessert, dass eine bessere Stützung des Netzes erreicht werden kann.

Die Wirkungsweise des erfindungsgemäßen Verfahrens ist dabei wie folgt. Es wird geprüft, ob sich Änderungen in Bezug auf die abgegebene Wirkleistung ergeben. Solche Änderungen treten häufig als Folge von veränderten Zuständen im Netz auf, wie Änderungen der Netzspannung und/oder Netzfrequenz. In einem zweiten Schritt wird geprüft, ob diese Änderung der abgegebenen Wirkleistung tatsächlich der vordefinierten Bedingung genügt, also ob beispielsweise die Netzfrequenz unter einen unteren Grenzwert gesunken ist. Dies geht bei einer Windenergieanlage mit doppelt gespeistem Asynchrongenerator einher mit einer Steigerung der über den Rotorkreis, das heißt über den netzseitigen Wechselrichter, ins Netz abgegebene Wirkleistung. Die verfügbare Stromreserve des netzseitigen Wechselrichters zur Einspeisung von Blindleistung verringert sich dadurch, was bisher eine Einschränkung für den Betrieb bzw. die Netzstützung durch die Windenergieanlage bedeutete. Die Erfindung vermeidet dies, indem sie eine gezielte und aufeinander abgestimmte Änderung der Blindleistungssollwerte beider Wechselrichter, also sowohl des netzseitigen wie auch des generatorseitigen Wechselrichters, vornimmt. In einer auf den ersten Blick widersinnig erscheinenden Maßnahme wird gemäß der Erfindung der Blindleistungssollwert am netzseitigen Wechselrichter gegenläufig verändert, dass heißt bei Ansteigen der von ihm abgegebenen Wirkleistung wird der Blindleistungssollwert gesenkt, während erfindungsgemäß bei dem anderen, dem generatorseitigen Wechselrichter der Sollwert für die Blindleistung im umgekehrten Sinn, also mitläufig erhöht wird. Vorzugsweise erfolgt dabei das mitläufige Erhöhen des Sollwerts am generatorseitigen Wechselrichter derart, dass gegenüber dem Netz eine Kompensation der Blindleistungsreduktion am netzseitigen Wechselrichter erreicht ist. Damit verhält sich die erfindungsgemäß betriebene Windenergieanlage in Bezug auf Blindleistung neutral gegenüber dem Netz, während gleichzeitig zur Stützung des Netzes weiterhin die volle, nicht-reduzierte Wirkleistung eingespeist wird. Eine gezielte Überkompensation durch örtliches Einspeisen induktiver oder kapazitiver Blindleistung zur weiteren Stützung des Netzes soll aber nicht ausgeschlossen sein.

Vorzugsweise erfolgt das Detektieren der Wirkleistungsänderung durch Überwachen der Netzfrequenz. Dies beruht auf der Erkenntnis, dass die Wirkleistungsbalance eines Netzes sich in der Frequenz ausdrückt. So sinkt bei zu wenig Wirkleistung die Netzfrequenz ab, während sie bei zu viel Wirkleistung ansteigt. Die Erfindung macht sich dies zu Nutze, um mit einer Überwachung der Netzfrequenz Änderungen in Bezug auf die Wirkleistung zu detektieren. Dies kann direkt oder indirekt erfolgen. Direkt geschieht dies durch Messen der Netzfrequenz mittels eines geeigneten Sensors, bspw. anhand der Nulldurchgänge von Spannungs- oder Stromsensoren. Dies kann aber auch indirekt erfolgen, indem die Frequenz gemessen wird und darauf basierend bestimmt wird, ob eine Änderung der Wirkleistung stattgefunden hat; hierbei kann die Wirkleistung eine Zwischengröße bilden, wie sie bspw. von einem Beobachter berechnet wird, oder sie kann durch andere Zustandsgrößen ersetzt sein, die keinen eigenen physikalischen Bezug mehr haben. Diese Art der Detektion bietet besondere Vorteile bei einem Absinken der Netzfrequenz, und zwar unterhalb eines unteren Grenzwerts. Wie bereits vorstehend beschrieben, ergibt sich hierbei eine erhöhte Wirkleistungseinspeisung über den netzseitigen Wechselrichter, sodass erfindungsgemäß der Blindleistungssollwert dieses Wechselrichters reduziert wird und dafür entsprechend derjenige des an sich nicht direkt betroffenen generatorseitigen Wechselrichters entsprechend erhöht wird. Durch diese besondere Art der gegenseitigen Abstimmung der beiden Wechselrichter des Umrichters wird erreicht, dass die Scheinleistung am netzseitigen Wechselrichter trotz der erhöhten Wirkleistungseinspeisung nicht oder nur geringfügig ansteigt, sodass die bisher in einem solchen Fall erforderliche Reduktion der Wirkleistung zur Vermeidung einer Überlastung des netzseitigen Wechselrichters nicht mehr benötigt wird. Die Windenergieanlage kann damit bei einer solchen Netzstörung die dringend im Netz benötigte Wirkleistung in unverminderter Höhe weiterhin bereitstellen. Entsprechendes gilt für den entgegengesetzten Fall einer zu hohen Netzfrequenz beim Überschreiten eines oberen Grenzwerts.

Die Erfindung erreicht damit eine bessere Ausnutzung der Komponenten der Windenergieanlage, insbesondere der Wechselrichter des Umrichters. Die vorhandenen Reserven der Windenergieanlage, insbesondere hinsichtlich der Scheinleistung des generatorseitigen Wechselrichters, werden besser genutzt.

Damit wird erreicht, dass der gesamt abgegebene Blindstrom beider Wechselrichter in der Summe unverändert bleibt, aber die Blindstromabgabe an dem höher belasteten Wechselrichter reduziert und am weniger belasteten Wechselrichter erhöht wird, sodass im elektrischen Netz insgesamt keine negative Veränderung bemerkt wird. Die Umrichterregelung verringert so die Spitzenbelastung an den einzelnen Wechselrichtern und den ihnen zugeordneten Leistungssträngen. Insbesondere kann die Umrichterregelung dabei die Auslegungsgrenzen der Wechselrichter und der zugeordneten Leistungsstränge berücksichtigen und die Strombelastung bezogen auf die Auslastung relativ zur Auslegungsgrenze in den jeweiligen Wechselrichtern oder den ihnen zugeordneten Leistungssträngen soweit wie möglich angleichen. Dieses hat den Vorteil, dass beide Leistungsstränge dieselbe anteilige Reserve haben und eine einseitig übermäßige Belastung bei kurzzeitiger hoher oder übermäßiger Belastung, z. B. durch Kurzschlüsse in der Nähe der Windenergieanlage, vermieden werden kann.

Unter den Wechselrichtern zugeordneten Leistungssträngen werden in diesem Zusammenhang die elektrischen Komponenten verstanden, die vom Wechselrichter aus elektrisch gesehen zwischen dem Wechselrichter und dem elektrischen Netz liegen. Also für den netzseitigen Wechselrichter je nach Ausführung beispielsweise die Netzdrossel, der Netzfilter, die umrichterseitigen Turmkabel und die umrichterseitige Transformatorwicklung. Für den generatorseitigen Wechselrichters sind dies je nach Ausführung beispielsweise die Verbindungskabel zum Generatorrotor einschließlich der Rotorturmkabel, der Generatorrotor, der Generatorstator, die statorseitigen Turmkabel und, je nach Transformatorausführung, die generatorseitige Transformatorwicklung. Gemäß einer weiteren bevorzugten Ausführungsform ist vorgesehen, dass bei einer Asymmetrie derart, dass ein Überschreiten des Grenzwerts nur in einer oder in zwei, aber nicht in allen Phasen auftritt, die Sollwerte für die Blindleistung des anderen Wechselrichters derart verändert werden, dass die Asymmetrie verringert wird. Dies impliziert, dass auch der andere Wechselrichter dann asymmetrisch angesteuert wird. Damit kann der Asymmetrie entgegengewirkt und eine Beschädigung der Windenergieanlage verhindert werden.

Vorzugsweise wird die gegenläufige Sollwertänderung der Blindleistung so bemessen, dass die Scheinleistung des netzseitigen Wechselrichters konstant bleibt. Damit wird eine maximale Ausnutzung des netzseitigen Wechselrichters erreicht, und gleichzeitig eine optimale Netzstützung erreicht. Unter konstant wird hierbei verstanden eine Änderung der Abgabe von maximal 10 % verstanden, vorzugsweise maximal 3 %. Es kann aber auch vorgesehen sein, dass die gegenläufige Änderung des Sollwerts der Blindleistung so bemessen wird, dass die von der Windenergieanlage abgegebene Scheinleistung konstant bleibt. Dies bietet den Vorteil einer höheren Netzneutralität. Dies kann insbesondere bei räumlich ausgedehnten Windparks von Vorteil sein, wenn verhältnismäßig lange Kommunikationswege existieren und damit die weiter entfernt stehenden Anlagen in eine netzneutrale Betriebsart gebracht werden, und die räumlich näher stehenden und damit schneller regelbaren Anlagen für Veränderungen der Schein- bzw. Blindleistung herangezogen werden.

Vorzugsweise erfolgt eine Vorsteuerung derart, dass die Änderung des Blindleistungssollwerts für mindestens einen der beiden Wechselrichter abhängig von der Netzfrequenz erfolgt. Damit kann schnell auf Änderungen an der Netzfrequenz reagiert werden, ohne dass es vorher zu unnötigen Annäherungen an Belastungsgrenzen der Komponenten, insbesondere der Scheinleistung bzw. der Stromgrenze des netzseitigen Wechselrichters, kommen muss. Eine solche Vorsteuerung kann auch in Bezug auf Zustandsgrößen der Windenergieanlagen durchgeführt werden, beispielsweise im Hinblick auf die Temperatur des Umrichters und seiner Wechselrichter und/oder des Generators. Droht der netzseitige Wechselrichter zu überhitzen, so wird erfindungsgemäß dessen Blindleistungssollwert verringert und derjenige des generatorseitigen Wechselrichters entsprechend erhöht. Bei einer thermischen Überlastung des generatorseitigen Wechselrichters bzw. des Generators selbst wird dann entsprechend verfahren.

Die Erfindung bezieht sich weiter auf eine Windenergieanlage mit einem Windrotor, einem davon angetriebenen doppelt gespeisten Asynchrongenerator mit einem Umrichter umfassend einen generatorseitigen Wechselrichter, einen netzseitigen Wechselrichter und wenigstens einen Umrichterregler zum Einspeisen von elektrischen Energie in ein Netz, und eine mit dem Umrichterregler zusammenwirkende Steuereinrichtung, der zum Steuern oder Regeln der von wenigstens einem der Wechselrichter an den doppelt gespeisten Asynchrongenerator und/oder das elektrische Netz abgegebenen Strom ausgebildet ist, wobei erfindungsgemäß ein Messmodul zum Erfassen der abgegebenen Wirkleistung und ein Änderungsbestimmungsmodul vorgesehen sind, welches zum Detektieren einer Änderung der abgegebenen Wirkleistung und zum Bestimmen, ob die detektierte Änderung einer vordefinierten Bedingung zu einem Netzparameter genügt, sowie zum Ändern des Sollwerts der abgegebenen Blindleistung gegenläufig zu der Änderung der Wirkleistung bei dem netzseitigen Wechselrichter und mitläufig bei dem generatorseitigen Wechselrichter, sofern die Bedingung erfüllt ist, ausgebildet ist.

Vorzugsweise wirkt das Änderungsbestimmungsmodul mit einem Abgleichmodul zusammen, welches zur Kompensation der Scheinleistung gegenüber dem Netz ausgebildet ist.

Zweckmäßigerweise weist das Messmodul Sensoren zur Bestimmung der Spannung und des Wirkstroms auf. Damit können autark Werte für die abgegebene Wirkleistung bestimmt werden. Es soll aber nicht ausgeschlossen werden, dass derartige Werte aus der Steuereinrichtung und dort ohnehin vorhandenen Parametern ermittelt werden. Der Aufwand für zusätzliche Sensoren verringert sich dadurch.

Im Übrigen ist der Umrichterregler vorzugsweise zur Ausführung des oben genannten Verfahrens ausgebildet. Zur näheren Erläuterung wird auf vorstehende Beschreibung verwiesen.

Die Erfindung wird nachfolgend unter Bezugnahme auf die beigefügte Zeichnung näher erläutert, in der ein vorteilhaftes Ausführungsbeispiel dargestellt ist.

Es zeigen:

Fig. 1          eine schematische Gesamtansicht einer Wind- energieanlage;

Fig. 2          ein Ausführungsbeispiel für einen erfindungs- gemäßen Umrichterregler;

Fig. 3 a,       Leistungsdiagramme für das Betriebsverhalten

b              des Umrichters ohne das erfindungsgemäße Ver- fahren;

Fig. 4 a, b     Leistungsdiagramme für das Betriebsverhalten des Umrichters mit dem erfindungsgemäßen Ver- fahren;

Fig. 5 a, b     Blindleistungsdiagramme für das erfindungsge- mäße Verfahren; und

Fig. 6          ein Kennliniendiagramm.

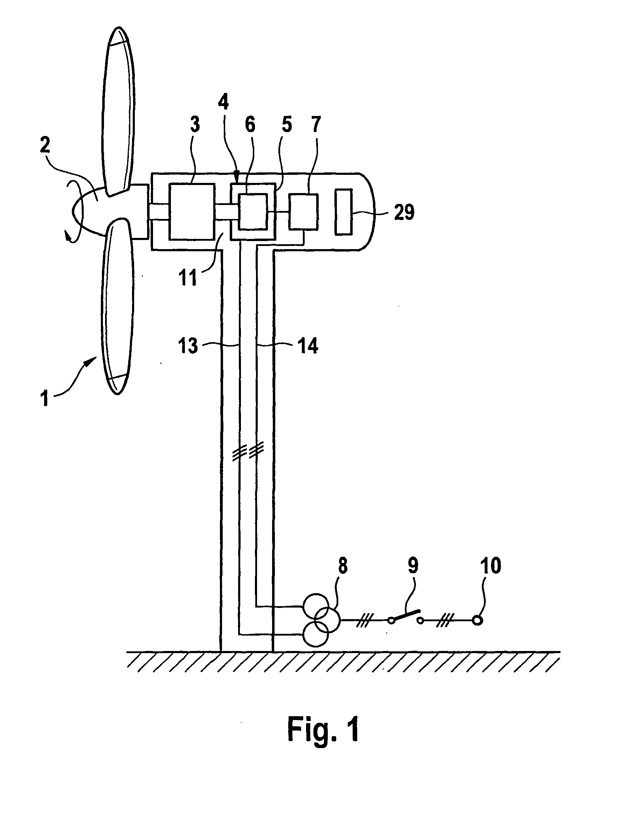

Der generelle Aufbau der Windenergieanlage wird anhand von Fig. 1 kurz erläutert. Der Windrotor 2 der Windenergieanlage 1 wird durch den Wind in Drehung versetzt. Der Windrotor 2 ist dabei mechanisch über ein Getriebe 3 mit dem Generator 4 verbunden und versetzt einen Rotor 6 des Generators 4 in Drehung. Ein Stator 5 des Generators ist über Leitungskabel 13 im Turm, einen Transformator 8 und einen Trennschalter 9 an das elektrische Netz 10 angeschlossen. Der Rotor 6 des Generators 4 ist an einen Umrichter 7 angeschlossen, der wiederum ebenfalls über Leitungskabel 14 im Turm, den Transformator 8 und den Trennschalter 9 an das elektrische Netz 10 angeschlossen ist.

Der Transformator 8 ist in dem dargestellten Ausführungsbeispiel mit drei Wicklungen ausgeführt, also mit jeweils separaten Wicklungen für den Leistungsstrang vom Stator 5 und von dem Umrichter 7. Ausführungen mit nur zwei oder einer anderen, höheren Anzahl von Wicklungen sind ebenfalls möglich.

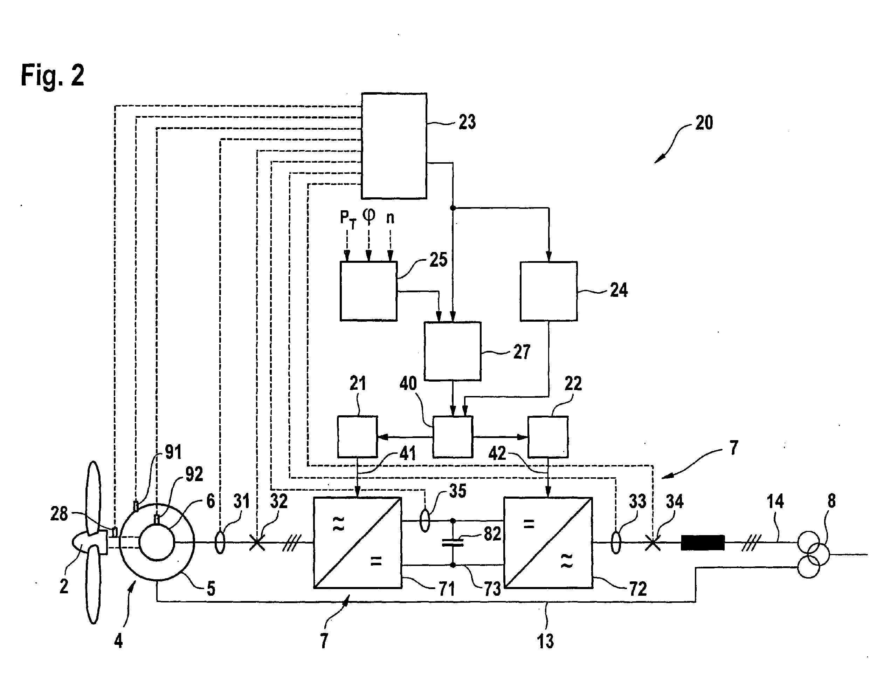

Der Aufbau des Umrichters 7 und seine Regelung sind näher in Fig. 2 dargestellt. Als Hauptkomponenten umfasst der Umrichter 7 einen generatorseitigen Wechselrichter 71 und einen netzseitigen Wechselrichter 72, die über einen Gleichspannungszwischenkreis 73 verbunden sind. Der netzseitige Wechselrichter 72 ist über eine Drossel 12 an den Transformator 8 angeschlossen. Der generatorseitige Wechselrichter 71 ist an den Rotor 6 des Generators 4 angeschlossen. Im Gleichspannungszwischenkreis 73 ist ein Kondensator 82 als Energiespeicher angeordnet. Es sei angemerkt, dass der Gleichspannungszwischenkreis auch als Gleichstromzwischenkreis ausgeführt sein kann, wobei dann entsprechend eine Induktivität als Energiespeicher vorzusehen ist.

Zur Steuerung des Umrichters 7 ist ein Umrichterregler 20 vorgesehen. Dieser umfasst als Hauptkomponenten Wechselrichterregler 21, 22, die mittels Steuerleitungen 41 bzw. 42 den jeweils ihnen zugeordneten Wechselrichter 71, 72 steuern.

Der Umrichterregler 20 ist dazu ausgebildet, je nach Drehzahl den Generator 4 in untersynchroner, synchroner oder übersynchroner Betriebsweise lastabhängig zu regeln. Bei niedriger Drehzahl erfolgt der Betrieb im untersynchronen Bereich, wobei dann Leistung über den Umrichter 7 in den Rotor 6 fließt. Bei einem Betrieb im Synchronpunkt fließt über den Umrichter 7 kein Strom, sondern der gesamte erzeugte Strom wird allein vom Stator 5 in den Transformator 8 gespeist. Bei hoher Drehzahl erfolgt ein Betrieb im übersynchronen Bereich, bei dem die vom Generator 4 erzeugte Leistung sowohl über den Stator 5 wie auch über den Rotor 6 und den Umrichter 7 abgegeben wird. Üblicherweise ist die Auslegung hierbei so, dass im übersynchronen Betrieb 60 bis 90 % der vom Generator 4 erzeugten elektrischen Leistung über den Stator und dementsprechend 10 bis 40 % über den Rotor 6 und den Umrichter 7 abgegeben werden.

Die jeweiligen elektrischen Größen des Umrichters 7 mit seinen Wechselrichtern 71, 72 und der Windenergieanlage insgesamt, insbesondere die anliegenden Spannungen und fließenden Wirk- sowie Windströme und die Zwischenkreisspannung, werden mittels Sensoren 31, 32, 33, 34, 35 gemessen und einem Messmodul 23 des Umrichterreglers 20 zugeführt. Es sei angemerkt, dass zusätzlich oder anstatt der Sensoren für Wirk- und Blindströme auch solche für Wirk- bzw. Blindleistung vorgesehen sein können. Aus Aufwandsgründen ist bei dem dargestellten Ausführungsbeispiel jedoch vorgesehen, dass die jeweiligen Ströme gemessen werden, und daraus mittels des Messmoduls 23 die entsprechenden Werte für die Leistung (Wirk- und Blindleistung aus Wirk- und Blindstrom) berechnet werden. Im Folgenden wird davon ausgegangen, dass zwischen diesen Größen auf an sich bekannte Weise durch Multiplikation mit der Spannung hin- und hergerechnet werden kann. Das Messmodul 23 stellt an seinem Ausgang die Messwerte und ggf. durch Weiterverarbeitung gewonnene Werte, wie die Wirk- und Blindleistung, einem Änderungsbestimmungsmodul 24 und einem Reglermodul 27 zur Verfügung.

Das Messmodul 23 ist dazu ausgebildet, eine Änderung des abgegebenen Wirkstroms bzw. der abgegebenen Wirkleistung zu erkennen und ein entsprechendes Ausgangssignal auszugeben wie bspw. bei einer Grenzwertüberschreitung am netzseitigen Wechselrichter 72. Es sei angemerkt, dass das Messmodul 23 als Element des Umrichterreglers 20 auch anzulegende Sollwerte berücksichtigen kann. So kann eine vom Messmodul 23 detektierte Änderung bspw. auch dann vorliegen, wenn durch einen anzulegenden Blindstromsollwert bzw. Blindleistungssollwert die maximal erlaubte Stromgrenze des Wechselrichters überschritten wird. In diesem Fall würde das Messmodul 23 ein entsprechendes Signal an seinen Ausgang ausgeben.

Das Sollwertbestimmungsmodul 25 ermittelt die von der Windenergieanlage und den einzelnen Wechselrichtern 71, 22 abzugebenden Leistungs- und Stromsollwerte, wobei es die von einer Betriebssteuerung 29 der Windenergieanlage angelegten Vorgabewerte, bspw. für die Wirkleistung $P_T$ und den Leistungsfaktor φ, und weitere zusätzliche Sensorwerte 28 der Windenergieanlage, wie z. B. Generatordrehzahl, Windgeschwindigkeit oder Komponententemperaturen des Generators 4, des Umrichters 7 oder der Stromleitungen berücksichtigt.

Das Änderungsbestimmungsmodul 24 ist dazu ausgebildet, zu bestimmen, ob die detektierte Änderung einer vordefinierten Bedingung genügt. Hierbei kann das Änderungsbestimmungsmodul 24 insbesondere Sollwerte für die Wechselrichter 71, 72 auf vorbestimmte Änderungen prüfen, bevor diese über das Reglermodul 27 an die Wechselrichterregler 21, 22 angelegt werden.

Im Grundbetrieb vergleicht das Reglermodul 27 die jeweiligen Reglerabweichungen der Wechselrichter 71, 72 mit den Sollwerten und gibt diese an die Wechselrichterregler 21, 22 weiter, sofern das Änderungsbestimmungsmodul 24 keine Änderung erkannt hat. Sofern das Änderungsbestimmungsmodul 24 aber eine Änderung erkennt, bspw. durch Erfüllen einer vordefinierten Bedingung, übergibt es entsprechende Werte an ein Abgleichmodul 40, welches mit den beiden Wechselrichterreglern 21, 22 verbunden ist und mit diesen zur Korrektur der anzulegenden Sollwerte zusammenwirkt. Bei der vordefinierten Bedingung kann es sich um verschiedene Parameter der Windenergieanlage und ihrer Komponenten, insbesondere der Wechselrichter handeln. So kann die vorbestimmte Bedingung das Überschreiten einer zulässigen Grenze bezüglich hoher Drehzahl sowie hoher Spannung, oder eine Veränderung der Netzfrequenz sein.

Die Wechselrichterregler 21, 22 steuern dann die Schalter der jeweiligen Wechselrichter 71, 72 entsprechend den angelegten Sollwerten, die bei Eintritt der vordefinierten Bedingung durch das Änderungsbestimmungsmodül 24 ggf. verändert wurden, so dass die entsprechenden Wirk- und/oder Blindströme bzw. -leistungen abgegeben werden.

Weiter sind in Fig. 2 Temperaturfühler 91, 92 dargestellt, welche an den Umrichterregler 20 angeschlossen sind. Dabei sind im Leistungsstrang des generatorseitigen Wechselrichters 71 Temperaturfühler 91 an den Komponenten 4, 8, 13 vorgesehen, die gemessene Temperaturwerte an den Umrichterregler 20 weitergeben. Ebenso sind im Leistungsstrang des netzseitigen Wechselrichters 72 Temperaturfühler 92 an den Komponenten 8, 12, 14 vorgesehen. Überschreitet ein Temperaturwert einen vorgegebenen Temperaturgrenzwert, so reduziert die Umrichterregelung 20 die Stromabgabe an dem betroffenen Wechselrichter 71, 72 und erhöht die Stromabgabe um den gleichen Wert am anderen Wechselrichter 71, 72. Bevorzugt wird dieser Wechsel bei der Blindstromabgabe durchgeführt.

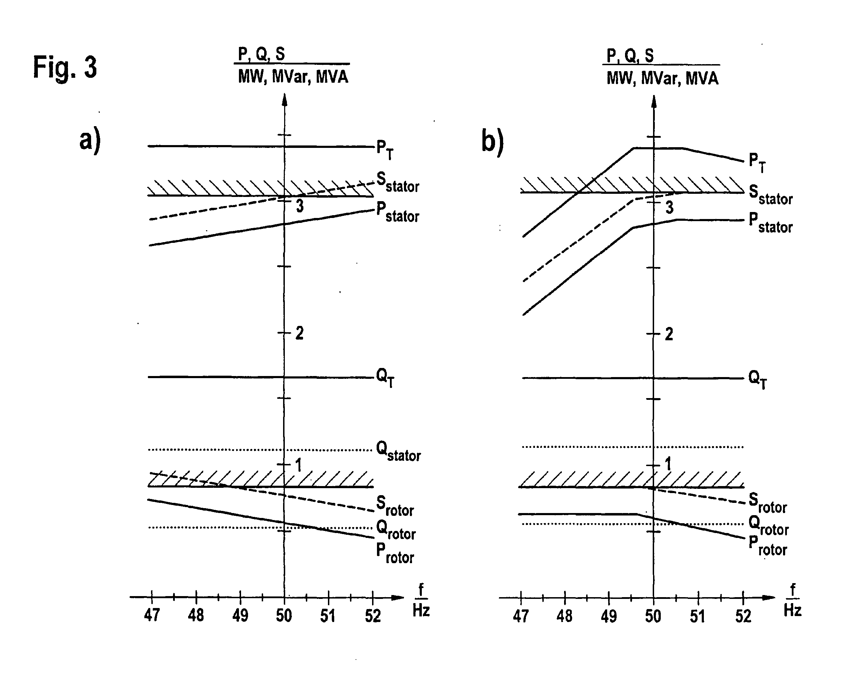

Dies wird nachfolgend näher unter Bezugnahme auf das erfindungsgemäße Verfahren erläutert. Es wird insbesondere Bezug auf die Figuren 3 bis 7 genommen.

Zum besseren Verständnis sei zuerst das Verfahren erläutert, wie es herkömmlicherweise durchgeführt wird. In Fig. 3a und b sind dargestellt der Betrieb der Windenergieanlage bei voller Last (Nennleistung). Bei dieser Leistung sind Windenergieanlagen mit doppelt gespeisten Asynchronmaschinen 4 so bemessen, dass sich die Aufteilung der Wirkleistung auf den Rotor 6 und den Stator 5 aus dem Verhältnis von Synchrondrehzahl $N_{sync}$ und Nenndrehzahl $N_{rat}$ bzw. aus dem Schlupf der Maschine ergibt. Hierbei ergibt sich die Wirkleistung des Stators 5 aus dem Verhältnis von Synchrondrehzahl zu Nenndrehzahl multipliziert mit der Gesamtwirkleistung

$$P_{stator} = N_{synch} / N_{rat} \times P_{wea}$$

und dementsprechend die Rotorwirkleistung aus der Differenz der Gesamtwirkleistung abzüglich der Statorwirkleistung

$$P_{rotor} = P_T - P_{stator} \ .$$

Im realen Betrieb kommt es zu Schwankungen der Parameter des Netzes. Dies können zum einen Schwankungen in der Netzspannung oder der Netzfrequenz sein. Es wird angestrebt, dass auch bei Schwankungen der genannten Netzparameter die Abgabe von Wirk- und Blindleistung gegenüber dem Netz möglichst unverändert sein soll. Dies ist in Fig. 3a durch die beiden horizontalen Linien dargestellt, welche mit $P_T$ und $Q_T$ für die gesamte Wirk- und Blindleistung der WEA dargestellt sind.

Aufgrund der Charakteristik der doppelt gespeisten Asynchronmaschine 4 verschiebt sich ausgehend von der Netznennfrequenz, die hier mit 50 Hz angenommen sei, die Wirkleistungsaufteilung zwischen Stator 5 und Rotor 6 des Generators 4. So ergibt sich bei Frequenzen unterhalb von 50 Hz ein größerer Wirkleistungsanteil $P_{rotor}$ des Rotors, so dass entsprechend die Wicklung des Rotors 6, der Umrichter 7 sowie die mit dem Umrichter verbundene Wicklung des Transformators 8 stärker belastet werden. Bei Frequenzen oberhalb der Nennfrequenz ergibt sich ein größerer Wirkleistungsanteil des Stators 5, so dass der Stator 5 des Generators 4 selbst, der generatorseitige Wechselrichter 71 sowie die Wicklung des Transformators 8, die am Stator 5 angeschlossen ist, und ggf. auch der Statorleistungsschalter (nicht dargestellt) durch höhere Ströme stärker belastet werden. Bei dem in den Figuren dargestellten Frequenzband von 47 Hz bis 52 Hz ergibt sich damit im ungünstigsten Fall der Unterfrequenz eine Höherbelastung des Rotors 6 von 130 % und im Fall der Überfrequenz eine Höherbelastung des Stators von 104 % der jeweiligen Auslegungswerte bei Nennbetrieb, wie oben angegeben. Berücksichtigt man weiter, dass die Windenergieanlage bei Nennleistung nicht nur die Nennwirkleistung, sondern auch die Nennblindleistung abgeben muss, so ergibt sich für den Rotor 6 und den Stator 5 die jeweils gestrichelt eingezeichnete Scheinleistung. Man erkennt, dass im Fall der Unterfrequenz für den Rotor 6 bereits bei einer Frequenz von 49 Hz die zulässige Belastungsgrenze erreicht und bei noch niedrigerer Frequenz überschritten würde; entsprechend würde im Fall der Überfrequenz für den Stator 5 die Grenze bei einer Frequenz von 50,5 Hz erreicht und darüber würde sie überschritten.

Um eine Überlastung und die damit einhergehende Gefahr einer Beschädigung zu vermeiden, müssen die jeweiligen Komponenten des Rotor- und Statorzweigs entweder entsprechend höher ausgelegt werden, oder es muss die abgegebene Wirkleistung bei größeren Abweichungen der Netzfrequenz reduziert werden. Letzteres ist der herkömmlicherweise eingeschlagene Weg. Dieser ist in Fig. 3b dargestellt. Es erfolgt eine Reduzierung der Wirkleistung abhängig von der Frequenz. Bei einer Unterfrequenz bedeutet dies, dass die vom Rotor 6 abgegebene Leistung bei Unterfrequenz nicht mehr linear ansteigt, sondern auf einer Frequenz von 49,5 Hz beschränkt wird und konstant bleibt. Da die abgegebene Blindleistung unverändert bleibt, bleibt damit auch die Scheinleistung des Rotors 6 konstant und verharrt damit an der zulässigen Grenze, ohne diese zu überschreiten. Der Rotor 6 und der Umrichter 7 werden damit wirkungsvoll vor Überlastung geschützt.

Allerdings kann diese Begrenzung im Rotorkreis wegen der elektrischen Verkoppelung bei der doppelt gespeisten Asynchronmaschine 4 nicht ohne Auswirkung auf den Statorkreis bleiben. Dies ist im oberen Bereich von Fig. 3b dargestellt. Man erkennt, dass wegen der Begrenzung der Wirkleistung des Rotors 6 die über die Synchrondrehzahl verknüpfte Wirkleistung des Stators 5 ebenfalls absinkt, und zwar verhältnismäßig stark. Entsprechend sinkt wegen der Konstanz der Blindleistung auch die Scheinleistung des Stators 5 ab. Die insgesamt von der Windenergieanlage abgegebene Wirkleistung $P_T$ verringert sich daher im Fall der Unterfrequenz beträchtlich, und zwar auf Werte bis zu nur 77 % der Leistung bei Nennfrequenz von 50 Hz. Eine entsprechende Reduktion der Wirkleistung am Stator 5 wird für den Fall der Überfrequenz vorgenommen, mit entsprechender Folge für die vom Rotorkreis abgegebene Wirkleistung. Auch hier ergibt sich eine Verringerung der insgesamt von der Windenergieanlage abgegebenen Wirkleistung, jedoch nur absinkend auf Werte von 96 % der Wirkleistung bei Nennfrequenz 50 Hz. Insgesamt erkennt man, dass zum Schutz vor Überlastung vor allem im Niederfrequenzbereich bisher eine erhebliche Reduktion der von der Windenergieanlage abgegebenen Wirkleistung in Kauf genommen werden musste. Damit ergeben sich beträchtliche Einbußen für den Betrieb und die wirtschaftliche Nutzung der Windenergieanlage.

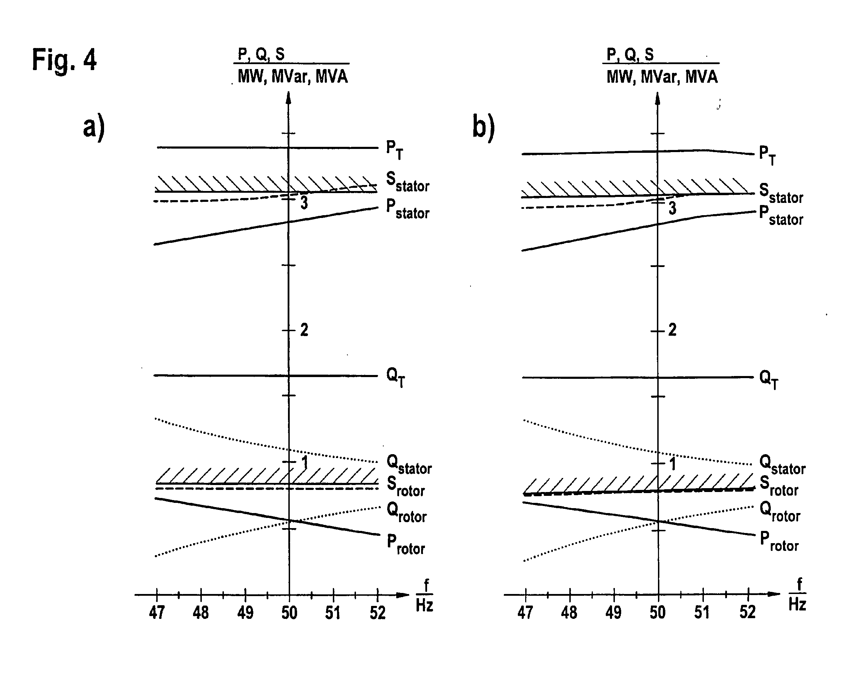

Die Erfindung löst dieses Problem, indem die Steuerung des Umrichters 7 so ausgelegt wird, dass die Sollwerte der abzugebenden Blindleistung gegenläufig verändert werden. Es wird nunmehr Bezug genommen auf Fig. 4.

Die Erfindung beruht auf der Erkenntnis, dass im Fall einer Unterfrequenz das Netz dringend der Zufuhr von Wirkleistung zur Stabilisierung bedarf. Die Wirkleistungseinspeisung durch die Windenergieanlage soll daher möglichst nicht reduziert werden. Die eingespeiste Blindleistung zu reduzieren, ist in der Regel ebenfalls nicht erwünscht, da sie stabilisierend wirkt. Gleichzeitig darf die Belastungsgrenze insbesondere im Rotorkreis nicht überschritten werden. Die Erfindung vereinigt diese gegensätzlich erscheinenden Ziele dadurch, dass sie die Sollwertvorgabe für die vom Rotorkreis einzuspeisende Blindleistung senkt (gegenläufige Anpassung). Damit wird erreicht, dass die Wirkleistungseinspeisung nicht verringert zu werden braucht, sondern in der an sich geforderten Weise linear mit abfallender Frequenz ansteigen kann. Durch die Absenkung der Sollwertvorgabe für die einzuspeisende Blindleistung erreicht die Erfindung, dass die insgesamt vom Rotorkreis eingespeiste Scheinleistung die zulässige Grenze einhält und diese nicht überschreitet. Durch diese gegenläufige Veränderung der Sollwerte für Wirk- und Blindleistung am Rotor werden damit die Ziele erreicht, ausreichend Wirkleistung zur Stützung des Netzes einzuspeisen und andererseits eine Überlastung der Komponenten im Kreis des Rotors zu vermeiden. In einem zweiten Schritt sieht die Erfindung nun vor, dass zum Ausgleich der abgesenkten Sollwerte für die Blindleistung im Rotorkreis diejenigen im Statorkreis erhöht werden (mitläufige Anpassung). Die Erfindung macht sich hierbei zu Nutze, dass wegen der notwendigerweise bei Unterfrequenz abfallenden, vom Stator 5 eingespeisten Wirkleistung ausreichend Stromreserve zur Verfügung steht, so dass insgesamt die Scheinleistung im zulässigen Bereich bleibt (siehe linke Hälfte von Fig. 4a: gestrichelte Linie $S_{stator}$ verbleibt unterhalb der schraffierten Grenzmarkierung). Die Erfindung nutzt also die ansonsten brachliegende Stromkapazität am Stator 5 aus, um die durch die Absenkung der Blindleistungssollwerte am Rotor 6 aufgebaute "Blindleistungsschuld" zu kompensieren. Sie erreicht damit eine optimale Ausnutzung der Komponenten, da die insgesamt von der Windenergieanlage abgegebene Wirk- und Blindleistung $P_T$ und $Q_T$ bei Unterfrequenz konstant bleiben.

Entsprechendes gilt an sich für den Fall der Überfrequenz. Allerdings kann hier eine geringfügige Überlastung im Statorkreis auftreten. Sie liegt bei 52 Hz nur in der Größenordnung von etwa 1 %, liegt also häufig noch innerhalb der Bauteiletoleranzen und braucht daher nicht gesondert berücksichtigt zu werden. Es gelten dann die Kurven, wie sie in Fig. 4a dargestellt sind.

Soll die Gefahr einer möglichen Überlastung aber auch für den Fall der Überfrequenz sicher ausgeschlossen werden, so gilt das in Fig. 4b dargestellte Diagramm. Hierbei wird im Fall der Überfrequenz die vom Stator 5 abgegebene Wirkleistung bei einer Frequenz von mehr als 51 Hz nicht mehr so stark gesteigert wie bei tieferen Frequenzen (siehe Knick in der $P_{stator}$-Kennlinie). Damit wird erreicht, dass die Scheinleistung im Statorkreis den Grenzwert nicht überschreitet. Die Erfindung macht sich hierbei zu Nutze, dass im Fall höherer Frequenz der Netzzustand an sich so ist, dass ausreichend Wirkleistung vorhanden ist (häufig gibt es sogar ein Überangebot), so dass eine Reduktion der Wirkleistungseinspeisung zumindest toleriert werden kann, wenn nicht sogar gewünscht ist.

Die Erfindung erreicht damit ohne Höherauslegung der stromführenden Komponenten die Möglichkeit, auch bei Unterschreiten von vormals kritischen Frequenzen (49,5 Hz als untere Grenzfrequenz und 50,5 Hz als obere Grenzfrequenz) die Einspeisung von Wirk- und Blindleistung aufrecht zu erhalten, und damit stützend auf das Netz einzuwirken und zusätzlich den Ertrag der Windenergieanlage zu maximieren.

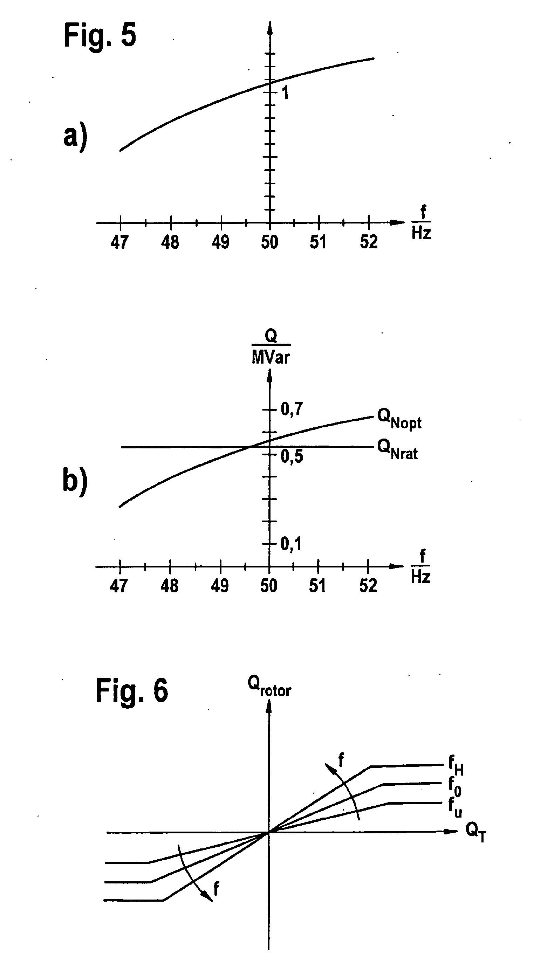

Die Erfindung erreicht dies im Wesentlichen durch eine Verschiebung der Sollwerte für die Blindleistung. In Fig. 5a ist der erfindungsgemäße optimale Blindleistungswert im Nennbetriebspunkt zur Frequenzkompensation dargestellt. Ausgehend von dem normalerweise gewährten Wert von 1=0 ist zu erkennen, dass das Verhältnis aus der optimalen Blindleistung gemäß der Erfindung zur Nennblindleistung über die Frequenz ansteigt. Der sich dabei ergebende Wert für den optimalen Sollwert für die Blindleistung des netzseitigen Wechselrichters 72 ist in Fig. b als Kurve $Q_{Nopt}$ dargestellt im Vergleich zu dem Betrieb mit Nennblindleistung $Q_{Nrat}$.

In Fig. 6 ist eine Kurvenschar dargestellt, welche den Anteil der vom netzseitigen Wechselrichter 72 abgegebenen Blindleistung $Q_{72}$ im Verhältnis zu der insgesamt abgegebenen Blindleistung $Q_T$ darstellt. Während herkömmlicherweise für Windenergieanlagen nur eine einzige dieser Kurven implementiert ist ("Blindleistungsstütze"), so sieht die Erfindung in Abhängigkeit von dem Zustand des Netzes, nämlich der Abweichung der Frequenz von der Netzfrequenz, jeweils eine andere Kennlinie vor. Es ergibt sich damit eine Kennlinienschar, wie sie beispielhaft für drei Frequenzen $F_u < F_0 < F_H$ dargestellt ist. Mit dieser erfindungsgemäßen frequenzabhängigen Blindleistungsstütze erreicht die Erfindung eine wesentlich verbesserte Stützung des Netzes bei unveränderten Komponenten der Windenergieanlage.

## Patentansprüche

1. Verfahren zum Steuern eines Umrichters (7) einer Windenergieanlage (1), der am Rotor (2) eines doppelt gespeisten Asynchrongenerators (4) zur Einspeisung elektrischer Energie in ein elektrisches Netz (10) angeschlossen ist, wobei der Umrichter (7) einen generatorseitigen Wechselrichter (71), einen netzseitigen Wechselrichter (72) und wenigstens einen Umrichterregler (20) zum Regeln und/oder Steuern der von dem wenigstens einem der Wechselrichter (71, 72) an den doppelt gespeisten Asynchrongenerator (4) und/oder das elektrische Netz (10) abgegebenen Strom umfasst, mit den Verfahrensschritten:

- Detektieren einer Änderung der abgegebenen Wirkleistung, und
- Bestimmen, ob die detektierte Änderung einer vordefinierten Bedingung zu einem Netzparameter genügt,
**gekennzeichnet durch**
- Ändern des Sollwerts der abzugebenden Blindleistung, und zwar gegenläufig zu der Änderung der Wirkleistung am netzseitigen Wechselrichter (72) und mitläufig bei dem generatorseitigen Wechselrichter (71) sofern die vordefinierte Bedingung erfüllt ist.

2. Verfahren nach Anspruch 1,
**dadurch gekennzeichnet, dass**
die abgegebene Wirkleistung aus der Spannung und dem abgegebenen Wirkstrom bestimmt wird.

3. Verfahren nach einem der vorhergehenden Ansprüche,
**dadurch gekennzeichnet, dass**
die gegenläufige und die mitläufige Änderung so aufeinander abgestimmt werden, dass eine Kompensation der Blindleistung erfolgt.

4. Verfahren nach einem der vorhergehenden Ansprüche,
**dadurch gekennzeichnet, dass**
das Detektieren der Wirkleistungsänderung durch Überwachen der Netzfrequenz erfolgt.

5. Verfahren nach einem der vorhergehenden Ansprüche,
**dadurch gekennzeichnet, dass**
die vordefinierte Bedingung eine Änderung der Netzfrequenz umfasst, insbesondere ein Unterschreiten einer unteren Grenzfrequenz und/oder ein Überschreiten einer oberen Grenzfrequenz.

6. Verfahren nach einem der vorhergehenden Ansprüche,
**dadurch gekennzeichnet, dass**
die gegenläufige Änderung des Sollwerts der Blindleistung so bemessen wird, dass die Scheinleistung des netzseitigen Wechselrichters (72) konstant bleibt.

**7.** Verfahren nach einem der Ansprüche 1 bis 5, **dadurch gekennzeichnet, dass** die gegenläufige Änderung des Sollwerts der Blindleistung so bemessen wird, dass die von der Windenergieanlage abgegebene Scheinleistung konstant bleibt.

**8.** Verfahren nach einem der vorhergehenden Ansprüche, **gekennzeichnet durch** Durchführen einer Vorsteuerung, bei der die Änderung des Blindleistungssollwerts für mindestens einen der beiden Wechselrichter (71, 72) abhängig von der Netzfrequenz erfolgt.

**9.** Verfahren nach Anspruch 8, **dadurch gekennzeichnet, dass** die gegen- und mitläufige Änderung so vorgesteuert werden, dass die von der Windenergieanlage abgegebene Blindleistung unverändert bleibt.

**10.** Verfahren nach Anspruch 8 oder 9, **dadurch gekennzeichnet, dass** die Änderung des Blindleistungssollwerts in Abhängigkeit von einer Zustandsgröße der Windenergieanlage limitiert wird.

**11.** Verfahren nach Anspruch 10, **dadurch gekennzeichnet, dass** als Zustandsgröße ein Temperatursignal des doppelt gespeisten Asynchrongenerators, seines Rotors, seines Stators und/oder mindestens eines der Wechselrichter (71, 72) verwendet wird.

**12.** Windenergieanlage mit einem Windrotor, einem davon angetriebenen doppelt gespeisten Asynchrongenerator (4) mit einem Umrichter (7) umfassend einen generatorseitigen Wechselrichter (71), einen netzseitigen Wechselrichter (72) und wenigstens einen Umrichterregler zum Einspeisen von elektrischer Energie in ein Netz (10) und eine mit dem Umrichterregler zusammenwirkende Steuereinrichtung, der zum Steuern oder Regeln der von wenigstens einem der Wechselrichter (71, 72) an den doppelt gespeisten Asynchrongenerator (4) und/oder das elektrische Netz (10) abgegebenen Strom ausgebildet ist, wobei ein Messmodul (23) zum Erfassen der abgegebenen Wirkleistung und ein Änderungsbestimmungsmodul (24) vorgesehen sind, welches zum Detektieren einer Änderung der abgegebenen Wirkleistung und zum Bestimmen, ob die detektierte Änderung einer vordefinierten Bedingung zu einem Netzparameter genügt, **dadurch gekennzeichnet, dass** das Änderungsbestimmungsmodul (24) weiter zum Ändern des Sollwerts der abgegebenen Blindleistung gegenläufig zu der Änderung der Wirkleistung bei dem netzseitigen Wechselrichter (72) und mitläufig bei dem generatorseitigen Wechselrichter (71), sofern die Bedingung erfüllt ist, ausgebildet ist.

**13.** Windenergieanlage nach Anspruch 12, **dadurch gekennzeichnet, dass** der Umrichterregler zur Ausführung des Verfahrens nach einem der Ansprüche 2 bis 11 ausgebildet ist.

**Claims**

**1.** Method for controlling a converter (7) of a wind energy installation (1), which converter is connected to the rotor (2) of a doubly-fed asynchronous generator (4) in order to feed electrical power into an electrical grid (10), wherein the converter (7) comprises a generator-side inverter (71), a grid-side inverter (72) and at least one converter regulator (20) for regulating and/or controlling the current which is output from the at least one of the inverters (71, 72) to the doubly-fed asynchronous generator (4) and/or to the electrical grid (10), having the following method steps:

- detection of a change in the output real power, and
- determination of whether the detected change satisfies a predefined condition relating to a grid parameter,

**characterized by**

- changing the nominal value of the reactive power to be output, to be precise in the opposite sense to the change in the real power at the grid-side inverter (72) and in the same sense as the generator-side inverter (71), when the predefined condition is satisfied.

**2.** Method according to Claim 1, **characterized in that** the output real power is determined from the voltage and the output real current.

**3.** Method according to one of the preceding claims, **characterized in that** the change in the opposite sense and the change in the same sense are matched to one another for reactive power compensation.

**4.** Method according to one of the preceding claims, **characterized in that** the real power change is detected by monitoring the grid frequency.

**5.** Method according to one of the preceding claims, **characterized in that** the predefined condition comprises a change in the grid frequency, in particular undershooting of a lower limit frequency and/or overshooting of an upper limit frequency.

6. Method according to one of the preceding claims, **characterized in that**
the change in the opposite sense of the nominal value of the reactive power is of such a magnitude that the volt-amperes of the grid-side inverter (72) remain constant.

7. Method according to one of Claims 1 to 5, **characterized in that**
the change in the opposite sense of the nominal value of the reactive power is of such a magnitude that the volt-amperes output from the wind energy installation remain constant.

8. Method according to one of the preceding claims, **characterized by**
carrying out pilot control, in which the change in the reactive power nominal value for at least one of the two inverters (71, 72) is dependent on the grid frequency.

9. Method according to Claim 8, **characterized in that**
the change in the opposite sense and the change in the same sense are subjected to pilot control such that the reactive power output from the wind energy installation remains unchanged.

10. Method according to Claim 8 or 9, **characterized in that**
the change in the reactive power nominal value is limited as a function of a state variable of the wind energy installation.

11. Method according to Claim 10, **characterized in that**
a temperature signal of the doubly-fed asynchronous generator, its rotor, its stator and/or at least one of the inverters (71, 72) is used as the state variable.

12. Wind energy installation having a wind rotor, a doubly-fed asynchronous generator (4) which is driven by the wind rotor, having a converter (7) comprising a generator-side inverter (71), a grid-side inverter (72) and at least one converter regulator for feeding electrical power into a grid (10), and a control device which interacts with the converter regulator and is designed to control or regulate the current which is output from at least one of the inverters (71, 72) to the doubly-fed asynchronous generator (4) and/or to the electrical grid (10), with a measurement module (23) for detecting the output real power and a change determining module (24) being provided, the latter of which in order to detect a change in the output real power and to determine whether the detected change satisfies a predefined condition, **characterized in that**
the change determining module (24) is designed to change the nominal value of the output reactive power in the opposite sense to the change in the real power for the grid-side inverter (72) and in the same sense for the generator-side inverter (71), when the condition is satisfied.

13. Wind energy installation according to Claim 12, **characterized in that**
the converter regulator is designed to carry out the method according to one of Claims 2 to 11.

## Revendications

1. Procédé pour commander un convertisseur (7) d'une installation éolienne (1) qui est relié au rotor (2) d'un générateur asynchrone (4) doublement alimenté afin de fournir de l'énergie électrique dans un réseau électrique (10), le convertisseur (7) comportant un onduleur (71) du côté générateur, un onduleur (72) du côté réseau et au moins un régulateur (20) de convertisseur pour réguler et/ou commander le courant fourni par au moins l'un des onduleurs (71, 72) au générateur asynchrone (4) doublement alimenté et/ou au réseau électrique (10), avec les étapes de procédé consistant à:

   - détecter une variation de la puissance active fournie, et
   - déterminer si la variation détectée d'une condition prédéfinie suffit pour un paramètre de réseau,

   **caractérisé par**

   - une modification de la valeur de consigne de la puissance réactive à fournir, à savoir dans le sens opposé à la variation de la puissance active pour l'onduleur (72) côté réseau et dans le même sens pour l'onduleur (71) côté générateur dans la mesure où la condition prédéfinie est satisfaite.

2. Procédé selon la revendication 1, **caractérisé en ce que** la puissance active fournie est déterminée à partir de la tension et du courant actif fourni.

3. Procédé selon l'une quelconque des revendications précédentes, **caractérisé en ce que** la variation en sens opposé et la variation dans le même sens sont accordées entre elles de sorte qu'une compensation de la puissance réactive ait lieu.

4. Procédé selon l'une quelconque des revendications précédentes, **caractérisé en ce que** la détection de la variation de la puissance active a lieu en surveillant la fréquence du réseau.

5. Procédé selon l'une quelconque des revendications précédentes, **caractérisé en ce que** la condition prédéfinie comporte une variation de la fréquence du réseau, en particulier un non dépassement d'une fréquence limite inférieure et/ou un dépassement d'une fréquence limite supérieure.

6. Procédé selon l'une quelconque des revendications précédentes, **caractérisé en ce que** la variation en sens opposé de la valeur de consigne de la puissance réactive est mesurée de sorte que la puissance apparente de l'onduleur (72) côté réseau demeure constante.

7. Procédé selon l'une des revendications 1 à 5, **caractérisé en ce que** la variation en sens opposé de la valeur de consigne de la puissance réactive est mesurée de sorte que la puissance apparente fournie par l'installation éolienne demeure constante.

8. Procédé selon l'une quelconque des revendications précédentes, **caractérisé par** une exécution d'une pré-commande au cours de laquelle la variation de la valeur de consigne de la puissance réactive pour au moins un des deux onduleurs (71, 72) a lieu en fonction de la fréquence du réseau.

9. Procédé selon la revendication 8, **caractérisé en ce que** la variation en sens opposé et la variation dans le même sens sont précommandées de sorte que la puissance réactive fournie par l'installation éolienne demeure inchangée.

10. Procédé selon la revendication 8 ou 9, **caractérisé en ce que** la variation de la valeur de consigne de la puissance réactive est limitée en fonction d'une grandeur d'état de l'installation éolienne.

11. Procédé selon la revendication 10, **caractérisé en ce que** la grandeur d'état employée est un signal de température du générateur asynchrone doublement alimenté, de son rotor, de son stator et/ou d'au moins un des onduleurs (71, 72).

12. Installation éolienne équipée d'un rotor d'éolienne, d'un générateur asynchrone (4), doublement alimenté et entrainé par ledit rotor, avec un convertisseur (7) comportant un onduleur côté générateur (71), un onduleur côté réseau (72) et au moins un régulateur de convertisseur pour fournir de l'énergie électrique à un réseau (10) et un dispositif de commande coopérant avec le régulateur de convertisseur, qui est conçu pour commander ou réguler le courant fourni par le ou les onduleurs (71, 72) au générateur asynchrone (4) doublement alimenté et/ou au réseau électrique (10), dans laquelle sont prévus un module de mesure (23) pour saisir la puissance active fournie et un module de détermination de variation (24) pour détecter une variation de la puissance active fournie et pour déterminer si la variation détectée d'une condition prédéfinie suffit pour un paramètre du réseau, **caractérisée en ce que** le module de détermination de variation (24) est conçu de plus pour modifier la valeur de consigne de la puissance réactive fournie dans le sens opposé à la variation de la puissance active au niveau de l'onduleur côté réseau (72) et dans le même sens au niveau de l'onduleur côté générateur (71) dans la mesure où la condition est satisfaite.

13. Installation éolienne selon la revendication 12, **caractérisée en ce que** le régulateur de convertisseur est conçu pour exécuter le procédé selon l'une des revendications 2 à 11.

Fig. 1

Fig. 2

EP 2 245 717 B1

Fig. 3

a)

$\frac{P, Q, S}{MW, MVar, MVA}$

$P_T$

$S_{stator}$

3

$P_{stator}$

2

$Q_T$

$Q_{stator}$

1

$S_{rotor}$

$Q_{rotor}$

$P_{rotor}$

47  48  49  50  51  52   $\frac{f}{Hz}$

b)

$\frac{P, Q, S}{MW, MVar, MVA}$

$P_T$

$S_{stator}$

3

$P_{stator}$

2

$Q_T$

$Q_{stator}$

1

$S_{rotor}$

$Q_{rotor}$

$P_{rotor}$

47  48  49  50  51  52   $\frac{f}{Hz}$

EP 2 245 717 B1

# Fig. 4

EP 2 245 717 B1

a)

$$\frac{P, Q, S}{MW, MVar, MVA}$$

$P_T$

$S_{stator}$

3

$P_{stator}$

2

$Q_T$

1

$Q_{stator}$

$S_{rotor}$

$Q_{rotor}$

$P_{rotor}$

47  48  49  50  51  52  $\frac{f}{Hz}$

b)

$$\frac{P, Q, S}{MW, MVar, MVA}$$

$P_T$

$S_{stator}$

3

$P_{stator}$

2

$Q_T$

1

$Q_{stator}$

$S_{rotor}$

$Q_{rotor}$

$P_{rotor}$

47  48  49  50  51  52  $\frac{f}{Hz}$

# Fig. 5

### a)

### b)

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007028582 A1
- US 20030214823 A1
- US 5652485 A